(19) **Europäisches Patentamt / European Patent Office / Office européen des brevets**

(11) **EP 1 933 497 A1**

(12) **EUROPEAN PATENT APPLICATION**

(43) Date of publication:
**18.06.2008 Bulletin 2008/25**

(51) Int Cl.:
*H04L 9/32* (2006.01)     *H04L 9/08* (2006.01)

(21) Application number: **06405513.0**

(22) Date of filing: **12.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ABB RESEARCH LTD.**
**8050 Zürich (CH)**

(72) Inventor: **Dacfey, Dzung**
**5430 Wettingen (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method of and server for authorizing critical commands**

(57)   The present invention is concerned with improved security and efficiency of industrial automation systems using a *shared authorization scheme* with a *threshold challenge/response* protocol. In a method of authorizing critical commands *CC* before execution in an industrial automation system requiring confirmation by m authorizing participants (42, 43, 45) out of *n* remote participants (41-45), each of the *n* remote participants is provided with a share $s_i$ of a secret key *k*. The shares $s_i$ are calculated by way of key splitting in a Galois Field of size q, i.e. by way of arithmetical operations mod($q$), where the modulus $q$ is a first large prime. Following reception of a challenge *C* prepared by an automation server (11) of the automation system and sent at least to the authorizing participants, the latter return a response $R_i$ based on their respective key share $s_i$ and the challenge *C* received. According to the invention, the verification step of the returned responses $R_i$ at the automation server is considerably simplified by reverting to modular exponentiation with a base *g* of the form g = $\alpha^N$ mod(p), where *p* is a second large prime with *p* = Nq+1, and where $2 \leq \alpha \leq p\text{-}2$.

**Fig. 3**

**Description**

FIELD OF THE INVENTION

The invention relates to the field of security in industrial automation systems. It departs from a method of authorizing critical commands using a shared authorization scheme with threshold challenge/response as described in the preamble of claim 1.

BACKGROUND OF THE INVENTION

Remote access to automation systems is becoming increasingly important. The possibility of monitoring and even sending commands remotely to the automation system may increase the efficiency of service and maintenance. Traditional systems typically use modems and dial-up connections from the remote service user to the automation system, with some proprietary protocol to handle the communication. Such an approach is reliable and also reasonably "secure": Attacks from outside "hackers" are inherently difficult due to the use of the protected public telephony system and of proprietary protocols. However, such an approach is expensive to develop and install, and is highly inflexible. Modern implementations of remote access systems are today based on Internet and Web technology: The user may access the system with a standard Web browser. Requests are sent from her computer over the Internet to the Web gateway installed at the automation system site, using the standard Internet protocol suite. With this approach, any one with a standard Web client (browser) may access the automation system via its dedicated Web server from anywhere. Development of such systems is cost-efficient as it may use widely available Internet software tools, and the resulting systems are easy to deploy and highly flexible, since no specialised equipment is needed in addition to the Web servers and automation gateways.

On the other hand, there are obvious concerns relating to the security of such systems, i.e. their susceptibility to attacks from and via the Internet. Since protocols, software platforms, and also the Internet itself (hosts performing gateway and routing functions) are open, potential attackers pose a high threat on confidentiality (eavesdropping), data integrity (message tampering), access authorisation / user authentication, and system availability (denial-of-service by jamming). In the Internet, a number of security countermeasures are becoming normal practice (cryptography, firewalls). These are targeted typically to e-commerce applications, where individual customers access a business Web site and must then possibly be authenticated to perform legally binding transactions. Public key infrastructures are being set up to properly authenticate users and support encrypted data transfer. These schemes are designed to allow servers to authenticate *individual* users, who act independently, and are suitable and sufficient for the purpose of e-commerce.

Remote access to automation systems is typically required by service personnel via their computers. These users need to access the automation system either (i) passively, i.e. reading plant status for remote monitoring, or (ii) actively, i.e. writing commands and downloads to the remote automation system. Attacking such communication by eavesdropping and in particular by introducing faked or tampered commands may lead to disastrous consequences. As a minimum precaution, the state-of-the-art security countermeasures known from commercial Internet applications should be deployed. The automation Web server only executes a request or command if it can verify the authentication credentials of the user (e.g. accepts her electronic certificate).

However, such a scheme does not protect against an *insider attack*, where a compromised insider possessing the authentication credentials initiates a malicious command on the automation system. To protect against such insider attacks, *shared authorization schemes* have been introduced. These schemes take advantage of the fact that the typical user in automation applications is a *participant* in a predefined group of service personnel: For critical requests from a user, the automation server only accepts to perform the command if a number of other participants also authorise the request. In detail, the automation server having received a critical command sends authorisation requests to the group of $n$ predefined participants, the other members of the service crew. In practice, this might be done via e-mail or wireless data messages, and use multicast transmission. The authorisation request may include details of the original command. Participants respond with response messages accepting or rejecting the command that are checked for authentication and integrity upon reception by the server. After a predefined number $m$ ($\leq n$) of participants has responded positively, the server considers the command as authorized. The basic assumption here is that there is no collusion between *all* members of the service crew. The method hence strengthens security against attacks from a limited number of colluding individuals, specifically against individual insiders.

A cryptographic strengthening of this method uses *threshold cryptography.* Critical commands are locked by an electronic key $k$ stored in the automation server. This key represents a *shared* secret, i.e. is shared by the participants of an authorised group (and the automation server). However, in contrast to standard secret key encryption or authentication, no individual peer or participant possesses the whole key $k$. Each of the $n$ participants of the authorised group is given only a partial key $s_i$, a so-called "share" or "split", calculated according to

$$\begin{bmatrix} s_1 \\ s_2 \\ s_3 \\ s_4 \\ s_5 \end{bmatrix} = \begin{bmatrix} 1 & x_1 & x_1^2 \\ 1 & x_2 & x_2^2 \\ 1 & x_3 & x_3^2 \\ 1 & x_4 & x_4^2 \\ 1 & x_5 & x_5^2 \end{bmatrix} \begin{bmatrix} k \\ a_1 \\ a_2 \end{bmatrix} \mathrm{mod}(p)$$

(for the example of $n = 5$ and $m = 3$), where the $x_i$'s are unequal public integers, $ai$ are secret auxiliary random numbers. All numbers are considered as integers in the finite Galois Field GF($p$), i.e. calculations are performed modulo a large (public) prime number $p$, where $p$ must be larger than the allowed range of the secret k, and may thus have a length of several hundred bits. In this $(m, n)$-threshold scheme, the key $k$ can only be reconstructed if $m$ shares are known. For example, if participants 2, 3, and 5 supply their shares, the automation server solves

$$\begin{bmatrix} s_2 \\ s_3 \\ s_5 \end{bmatrix} = \begin{bmatrix} 1 & x_2 & x_2^2 \\ 1 & x_3 & x_3^2 \\ 1 & x_5 & x_5^2 \end{bmatrix} \begin{bmatrix} k \\ a_1 \\ a_2 \end{bmatrix} \mathrm{mod}(p)$$

for $k$, and accepts the command only if the result matches the stored secret $k$. Fewer than $m$ participants will be unable to determine $k$.

It has to be noted that in the commercial and Internet environment the main concerns are the confidentiality and authentication and authorization of individual unrelated users. Shared authorization and threshold cryptography is thus rarely relevant to mainstream commercial office and Internet applications. In contrast, industrial automation systems are operated by a predefined group of operators, and the main concern is the vulnerability to insider attacks. The *shared authorization scheme* using *threshold cryptography* can be considered as a password exchange, except that the 'password' $k$ is shared between $n$ participants. However, as in password schemes, there remain the following vulnerabilities:

1. An eavesdropper listening to the communication can steal the shares $s_i$ being transmitted from the participants to the automation server in authorization response messages, and thus obtain the secret master key $k$, and perform subsequent attacks.
2. A 'man-in-the-middle' can impersonate an automation server and send spoofed authorization request messages to the participants. These respond by disclosing their shares $s_i$, so that the man-in-the-middle obtains the master secret $k$.

Conventional encryption between server and participants could be used to protect against the first vulnerability, but would require a separate protocol for key management. The second vulnerability is more difficult to deal with.

A publication by Dacfey Dzung and Céline Briod entitled "Shared Authorization in Industrial Automation Systems using Threshold Cryptography", 10th IEEE International Conference on Emerging Technologies and Factory Automation, ETFA 2005, Catania, Italy, 19 - 22 September 2005, Proceedings, Vol.2, pp.867-876, addresses both vulnerabilities. It proposes the use of a challenge/response (C/R) protocol to protect against eavesdropping and also against password or share stealing attacks. Combining the C/R concept with threshold cryptography thus results in a *shared authorization scheme* using a *threshold challenge/response* protocol. In challenge/response (C/R) protocols, the server sends a challenge $C$ to the client, where C is a random 'nonce' (number used only once). The client must return a response $R$ = f($C$, k), where f is a non-invertible function of the secret key $k$ (shared by both the server and the client), and of the challenge $C$. For example, $f(C,k) = E_k(C)$, i.e. an encryption of $C$ using key $k$. A client returning a correct $R$ has proven to the server that it knows $k$, and is thus authenticated to the server.

In particular, the automation server includes a challenge C in the 'authorization request' message. If participant $i$ accepts the command, she responds with $R_i = C^{si} \mathrm{mod}(p)$ in the 'authorization response' instead of plainly divulging her share $s_i$. Assuming that exponentiation $\mathrm{mod}(p)$ is a "one-way function", i.e. that calculation of discrete logarithms is infeasible, this procedure is secure and protects against eavesdroppers and does not disclose the master key k to any impersonated server. Having received, e.g., $R_2$, $R_3$, $R_5$, the server then verifies the responses by formally checking

$$R_2^{\chi_2} \cdot R_3^{\chi_3} \cdot R_5^{\chi_5} \overset{?}{=} C^k \bmod(p),$$

where the exponents $\chi_i$ will be derived below. However, detailed analysis has revealed that this check involves a large number of possibilities and is computationally laborious, and that complete verification requires a large number of individual checks if $p$ is large.

DESCRIPTION OF THE INVENTION

It is therefore an objective of the invention to improve security and efficiency of industrial automation systems using a shared threshold challenge/response authorization. These objectives are achieved by a method, an automation server, and a computer program according to the claims 1, 9 and 10, respectively. Further preferred embodiments are evident from the dependent patent claims, wherein the claim dependency chosen shall not be construed as excluding alternative and meaningful claim combinations.

In a method of authorizing critical commands $CC$ before execution in an industrial automation system based on a *shared authorization scheme* using a *threshold challenge/response* protocol and requiring confirmation by m authorizing participants out of $n$ remote participants, each of the $n$ remote participants is provided with a share $s_i$ of a secret key $k$. The shares $s_i$ are calculated by way of key splitting in a Galois Field of size q, i.e. by way of arithmetical operations mod($q$), where the modulus $q$ is a first large prime. Following reception of a challenge $C$ prepared by an automation server of the automation system and sent at least to the authorizing participants, the latter return a response $R_i$ based on their respective key share $s_i$ and the challenge $C$ received. According to the invention, the verification step of the returned responses $R_i$ at the automation server is considerably simplified by reverting to modular exponentiation with a base $g$ of the form g = $\alpha^N$ mod($p$), with $2 \le \alpha \le p$-2 and $N$ a small positive integer, and where $p$ is a second large prime with $p$ = $Nq$+1. In other words, the server evaluates terms that comprise powers of $g$ in a Galois Field of size $p$, i.e. mod(p).

In a first variant, the challenge $C$ is calculated by the server as a modular exponentiation of the base $g$ by a random number $c$, i.e. $C$ = g$^c$ mod($p$). In a second variant, the response $R_i$ is calculated by the accepting participants comprises a modular exponentiation of the base $g$ by a (multiple of a) random number $c$ received as the challenge $C$ by the participants. In both cases, the base $g$ is a system constant checked for its subgroup generation properties at system set-up, e.g. by the server or a system administrator.

In a third variant, the base g itself has a random component, and is thus checked for its subgroup generation properties before a challenge $C$ equal to the base $g$ is sent by the server to a participant for modular exponentiation by the latter. As before, if the base $g$ is a generator of the unique size-$q$ cyclic subgroup $G_q$, the responses returned by the authorizing participants performing modular exponentiation will not be accidentally limited to a size-N cyclic subgroup, and thus are hard to guess.

In an advantageous embodiment of the invention, the secret key share $s_i$ of the participants is masked in their responses $R_i$ by way of a "Zero Knowledge Proof" (ZKP) extension of the challenge/response protocol. Here, the authorizing participants first transmit a commitment $t_i$ based on an auxiliary random number $z_i$ before responding to the challenge. In a preferred variant of this embodiment, the commitment $t_i$ and/or the response $R_i$ comprise a modular exponentiation of the base $g$ by the auxiliary random number $z_i$ and/or an algebraic combination of the random number $c$, the secret $s_i$ and the auxiliary random number $z_i$, respectively. In an alternative variant, said combination itself is returned as the response $R_i$, and modular exponentiation by the combination is performed at the automation server.

BRIEF DESCRIPTION OF THE DRAWINGS

The subject matter of the invention will be explained in more detail in the following text with reference to preferred exemplary embodiments which are illustrated in the attached drawings, in which:

Fig. 1 depicts a server-participant structure of a shared authorization scheme,
Fig.2 schematically shows the steps of a threshold challenge/response protocol, and
Fig.3 schematically shows the steps of a ZKP refinement of the protocol.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

For the purpose of notational and mathematical rigour, reference is made to the patent US 7'010'692, disclosing a method for securely proving knowledge of a shared small secret password S between two parties using messages exchanged across an open communication channel that is secure against off-line dictionary attacks. Accordingly; exponentiation in $Z_{p*}$, the multiplicative finite cyclic group in the Galois Field GF(p) of integers modulo p, where p is a large prime, is considered. The p elements (members) of GF(p) are the integers {0, 1, .. p-1}, whereas the elements of the group $Z_{p*}$ are the p-1 integers {1, .. p-1}, and the group operator (represented by *) is multiplication modulo p. Mapping functions $H_k(g)$ represent exponentiation in the group, where g is a generator of the group, and k is an exponent in terms of group operations, e.g. $H_2(g)=g*g$. A generator g of the group $Z_p*$, or a primitive root in GF(p), generates, via $g^x$ mod (p), all elements in $Z_{p*}$ as x steps from 0 to p-2. The functions $H_k$ are commutative, i.e. the order of multiple operations that must be performed in sequence can be reversed without changing the effective computation. For example, in exponentiation mod(p), $(g^y)^z=(g^z)^y$ and $(g^y)^z = g^{(y.times.z)\ mod(p-1)}$ mod(p).

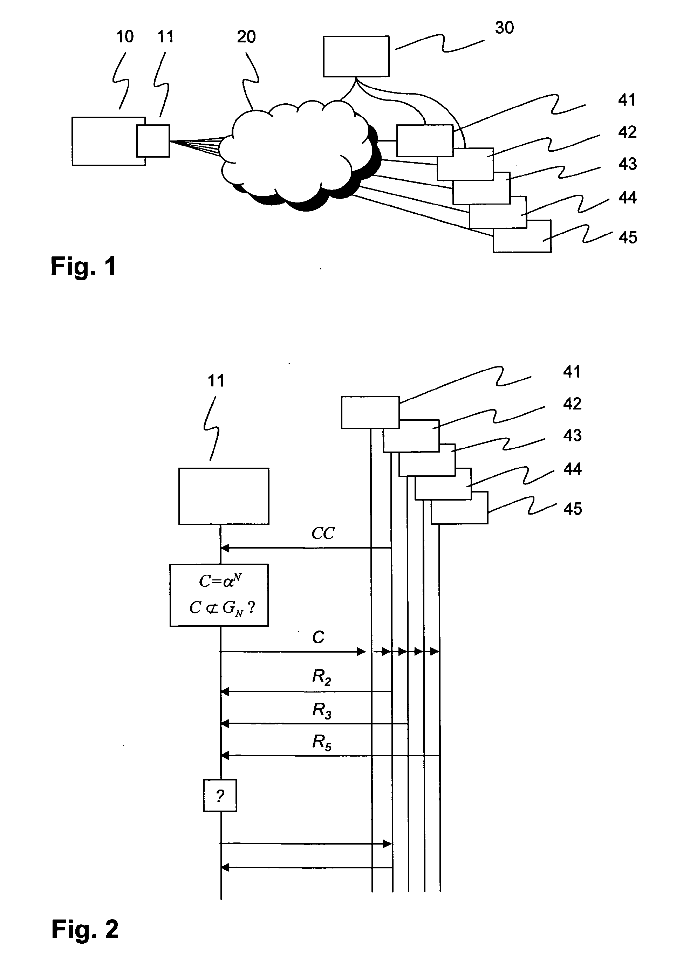

Fig.1 depicts the various entities in a shared authorization scheme for industrial automation. An industrial automation system 10 is equipped with an automation server 11, which in turn is connected via a communication network 20 to a number of participants 41, 42, 43, 44, 45. The latter may remotely access the automation server 11 and perform critical commands on the automation system of the industrial automation system 10. To set up the scheme, a trusted system administrator 30 may provide appropriate management service, such as configuring the access control lists in the automation server 11 with the group identity of the participants 41, 42, 43, 44, 45 responsible for the commands.

Fig.2 depicts the threshold C/R protocol according to this invention in the form of a message sequence diagram. The requesting participant or user 42 sends a critical command CC to the automation server 11, which in turn sends authorisation requests to a group of *n* predefined participants 41-45. The request contains a *random challenge C*. If a participant accepts the command, she returns an authorization response message to the server, containing her response $R_i$ in the form of a modular exponentiation

$$R_i = C^{s_i} \bmod(p) \tag{eq.0},$$

where $s_i$ is her share calculated initially according to the threshold scheme:

$$\begin{bmatrix} s_1 \\ s_2 \\ s_3 \\ s_4 \\ s_5 \end{bmatrix} = \begin{bmatrix} 1 & x_1 & x_1^2 \\ 1 & x_2 & x_2^2 \\ 1 & x_3 & x_3^2 \\ 1 & x_4 & x_4^2 \\ 1 & x_5 & x_5^2 \end{bmatrix} \begin{bmatrix} k \\ a_1 \\ a_2 \end{bmatrix} \bmod(q) \tag{eq.1}$$

and where all numbers $k$, $s_i$, $x_i$ are between 0 and q-1. After *m* participants have submitted their responses $R_i$, the server checks their combined responses by verifying the product (assuming that the m=3 participants No. 2, 3, and 5 have responded)

$$C^k \overset{?}{=} R_2^{\chi_{2,B}} \cdot R_3^{\chi_{3,B}} \cdot R_5^{\chi_{5,B}} \bmod(p) \tag{eq.2}$$

where the constants $\chi_{i,B}$ are given below and are stored by the automation server. If equality holds, the server considers the command to be authorized by the m participants. In this case, the server may ask for confirmation by the requesting participant before executing the command.

The meaning of the numbers $\chi_{i,B}$, in (eq.2) can be derived by inverting (eq.1)

$$\begin{bmatrix} k \\ a_1 \\ a_2 \end{bmatrix} = \begin{bmatrix} 1 & x_2 & x_2^2 \\ 1 & x_3 & x_3^2 \\ 1 & x_5 & x_5^2 \end{bmatrix}^{-1} \begin{bmatrix} s_2 \\ s_3 \\ s_5 \end{bmatrix} \mathrm{mod}(q) \qquad \text{(eq.3)}$$

or, for the secret k of interest,

$$k = \begin{bmatrix} \chi_{2,B} & \chi_{3,B} & \chi_{5,B} \end{bmatrix} \begin{bmatrix} s_2 \\ s_3 \\ s_5 \end{bmatrix} \mathrm{mod}(q) = \left( \chi_{2,B} \cdot s_2 + \chi_{3,B} \cdot s_3 + \chi_{5,B} \cdot s_5 \right) \mathrm{mod}(q) \qquad \text{(eq.4)}$$

where the constants $\chi_{i,B}$ constitute the first row of the inverted $m \times m$ matrix in (eq.3), and depend on the set $B$ of participants (their $x_i$'s) from which positive responses have been received by the server (for this example, $B = \{2,3,5\}$). Taking advantage of the fact that (eq.1) comprises polynomials in $x_i$ instead of arbitrary linear combinations of $\alpha_i$ and $k$, and from Lagrange's polynomial interpolation formula, $\chi_{i,B}$ can be given explicitly as a product of $m$-1 factors:

$$\chi_{i,B} = \prod_{\substack{\ell \in B, \\ \ell \neq i}} \frac{x_\ell}{x_\ell - x_i} \mathrm{mod}(q) \qquad \text{(eq.5)}$$

As the shared secrets $s_i$ are not divulged to the server, the latter may not proceed to a direct verification of (eq. 4), i.e. a check whether $k = (\chi_{2,B} \cdot s_2 + \chi_{3,B} \cdot s_3 + \chi_{5,B} \cdot s_5) \mathrm{mod}(q)$ actually holds. Instead, the server has to evaluate the responses $R_i$ calculated according to (eq.0) and provided by the participants. To that purpose, it is important to note that (eq.4) translates into

$$k + lq = \chi_{2,B} \cdot s_2 + \chi_{3,B} \cdot s_3 + \chi_{5,B} \cdot s_5 \text{ for some } l, \ 0 < l < 3q, \qquad \text{(eq.4')}$$

since the $\chi_i$ and $s_i$ are between 0 and $q$-1. Hence in practice up to $3q$ distinct values of $l$ or $C^{k+lq}$, respectively, must be tested for the direct verification of (eq.2), i.e. for the check whether

$$C^{k+lq} \overset{?}{=} R_2^{\chi_{2,B}} \cdot R_3^{\chi_{3,B}} \cdot R_5^{\chi_{5,B}} \ \mathrm{mod}(p) \qquad \text{(eq.2')}$$

holds. This fact obviously necessitates considerable computational efforts. In addition, unfavourable choices of the challenge $C$, such as 1 or $p$-1 or possibly many other values which do not generate the whole group Zp*, would allow an attacker to easily guess valid responses and hence break the system.

The present invention takes advantage of the fact that, unlike suggested in the prior art publication by Dzung and Briod, the prime $p$ used in (eq.0) for the modular exponentiation in the challenge response scheme and the prime q required in (eq.1) for the purpose of threshold cryptography need not be identical. In other words, different moduli or Galois Fields may be used for the threshold cryptography part and the challenge response part.

In particular, the verification step to be performed by the automation server is considerably simplified if the two abovementioned prime numbers $p$ and $q$ are chosen such that

$$p - 1 = Nq, \qquad \text{(eq.6)}$$

where N is a small positive integer, e.g. $N = 2$, and if, in addition, the verification step operates on terms including a modular exponentiation of a base g of the form

$$g = \alpha^N \mod(p), \qquad\qquad (eq.7)$$

for some constant $\alpha$ with $2 \leq \alpha \leq p\text{-}2$. There are several ways how to introduce this modular exponentiation, three of which will be detailed in the following.

In a *first* variant, a challenge $C$ is chosen to be of the form

$$C = g^c \mod(p), \qquad\qquad (eq.8)$$

where $c$ is a random number between 1 and $q$-1 (i.e. $1 \leq c < q$-1), and responses $R_i$ of the form of (eq.0) are returned to be evaluated in the verification step at the server. In (eqs.6 to 8), the numbers $g$, $p$ and $q$ are fixed quantities of the system, whereas the number $c$ is selected randomly by the server for each new challenge $C$.

With the aforementioned definitions, (eq.2) above can be evaluated directly instead of checking a large number of values of $l$ in (eq.2'). This finding follows from:

$$R_2^{\chi_{2,B}} \cdot R_3^{\chi_{3,B}} \cdot R_5^{\chi_{5,B}} \mod(p) = C^{\chi_{2,B} \cdot s_2 + \chi_{3,B} \cdot s_3 + \chi_{5,B} \cdot s_5} \mod(p) = \alpha^{Nc(\chi_{2,B} \cdot s_2 + \chi_{3,B} \cdot s_3 + \chi_{5,B} \cdot s_5)} \mod(p)$$

$$= \alpha^{Nc(\chi_{2,B} \cdot s_2 + \chi_{3,B} \cdot s_3 + \chi_{5,B} \cdot s_5) \mod(p-1)} \mod(p) = \alpha^{Nc(\chi_{2,B} \cdot s_2 + \chi_{3,B} \cdot s_3 + \chi_{5,B} \cdot s_5) \mod(Nq)} \mod(p) =$$

$$\alpha^{N[c(\chi_{2,B} \cdot s_2 + \chi_{3,B} \cdot s_3 + \chi_{5,B} \cdot s_5) \mod(q)]} \mod(p) = \alpha^{(Nck) \mod(q)} \mod(p) = \alpha^{Nck} \mod(p) = C^k \mod(p).$$

In a *second* variant, the server chooses and sends a random number $c$ between 1 and $q$-1 as the challenge $C$ to the participants. Each accepting participant then returns her response

$$R_i = g^{cs_i} \mod(p). \qquad\qquad (eq.0')$$

Again, the numbers $g$, $p$ and $q$ are fixed quantities of the system, whereas the number $c$ is selected randomly by the server for each new challenge $C$. Compared to the first variant, exponentiation by the random number c is moved from the server to the participants, wherein in (eq.0'), the exponentiation by the product $c\,s_i$ is equivalent to exponentiation by $(c\,s_i) \mod(Nq)$, which limits the size of the exponent and facilitates calculations by the participants.

In a *third* variant, the server randomly chooses a number $\alpha$ with $2 \leq \alpha \leq p\text{-}2$ for each new challenge C of the form

$$C = g = \alpha^N \mod(p), \qquad\qquad (eq.7')$$

and the accepting participants return responses $R_i$ of the form of (eq.0). In this variant, the base $g$ no longer is a system constant. In this variant, the server only performs an exponentiation by a small number $N$, whereas the participants perform similar exponentiations as in the first variant.

In addition, the base $g$ of the form of (eq.7) or (eq.7') is a generator of a subgroup of $Z_{p^*}$ of size $q$ or less, as

$$g^q \mod(p) = \alpha^{Nq} \mod(p) = \alpha^{Nq \mod(p-1)} \mod(p) = \alpha^{Nq \mod(Nq)} \mod(p) = 1.$$

Accordingly, for all the aforementioned variants, a check has to be made in order to make sure that the responses $R_i$ are not accidentally constrained to the unique size-$N$ cyclic subgroup $G_N$ (such as $G_2 = \{1, p\text{-}1\}$ for N=2), but actually cover the unique size-$q$ cyclic subgroup $G_q$. Hence, the fixed base g (variants 1 and 2) or each random base $g$ or challenge $C$ (variant 3, indicated in the textbox in Fig.2) has to generate the unique cyclic subgroup $G_q$ of size q. The latter is most conveniently verified by checking that g is not in $G_N$, where $G_N$ is generated by some generator $g_N$ of the form $g_N = \alpha^q$, i.e. $G_N = \{g_N{}^0, g_N{}^1, g_N{}^2, .. g_N{}^{N-1}\}$ mod(p) (for some alpha such that $g_N{}^i$ mod(p) generates N distinct values).

A further improvement to the threshold C/R authorization protocol described previously relates to a so-called "Zero-Knowledge" extension. Although the above threshold C/R scheme does not directly reveal the master key *k* to eavesdroppers or any fake server, it may leak some information about the participants' shares $s_i$, since the transmitted response $R_i$ is a function of $s_i$. An attacker who can observe a large number of matching challenge / response pairs can increase the probability of successful attack. Zero-Knowledge Proofs (ZKP) allows a "prover" to prove his knowledge of a secret to a "verifier", without leaking any information about the secret to the verifier, c.f. the article by C.P.Schnorr entitled "Efficient identification and signature for Smart Cards", in G Brassard, ed., Advances in Cryptology -- Crypto '89, 239-252, Springer-Verlag, 1990, Lecture Notes in Computer Science, nr 435.

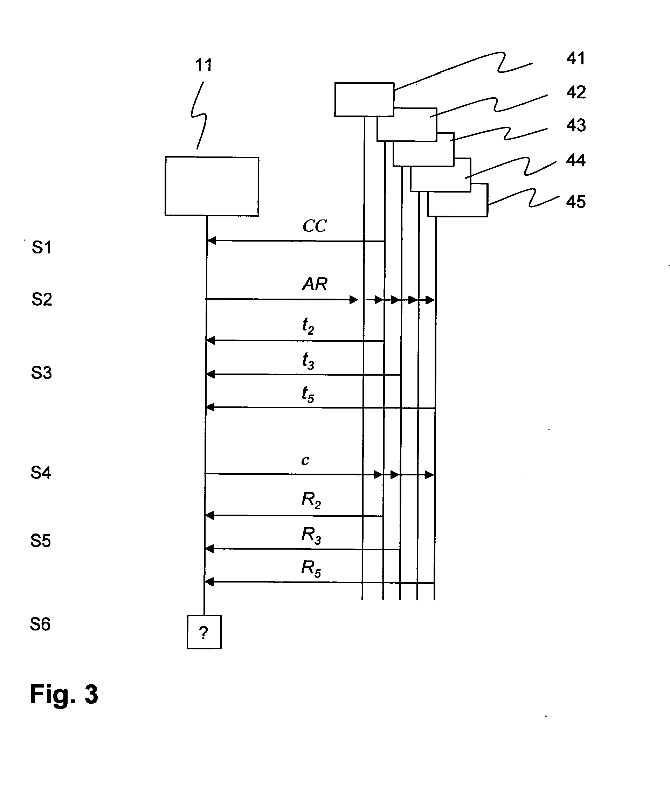

Fig.3 depicts an adaptation of Schnorr's ZKP in the form of a *ZKP Threshold C/R authorization protocol* where there is no information leakage about the participants' shares. The server takes the role of "verifier", while the authorizing participants together represent the "prover". The zero knowledge property of this authorisation protocol follows from the fact that it is mathematically equivalent to the Schnorr ZKP.

Based on a secret k, in a configuration step that may be executed at the system administrator 30, the secret shares $s_i$ are calculated as in (eq.1) above, and a master key *y* is defined as

$$y = g^k \bmod(\mathrm{p}) \qquad\qquad (eq.9)$$

where the base *g* is a public system constant of the form

$$g = \alpha^N \bmod(p), \qquad\qquad (eq.7)$$

$\alpha$ being a number with $2 \le \alpha \le p\text{-}2$. Again, the base g has initially to be verified to be a generator of the subgroup $G_q$ of size $q$ in GF($p$). The secret shares $s_i$ are then distributed to the participants, while the master key $y$ is held at the server.

Referring now to the message sequence diagram of Fig.3, in step S1, the requesting participant 42 sends a critical command *CC* to the automation server 11. In step S2, the server sends authorisation requests AR to a group of $n$ predefined participants 41-45. In step S3, the authorizing participants 42, 43, 45 first return a "commitment" $t_2, t_3, t_5$ of the form

$$t_i = g^{z_i} \bmod(p) \qquad\qquad (eq.10)$$

where $z_i$ is an auxiliary random number between 0 and $q$-1 chosen by participant $i$ and kept secret. In step S4, the server now chooses and sends a random number $c$ between 0 and $q$-1 as the challenge $C$ to the participants. Each accepting participant then returns, in step S5, her response

$$R_i = g^{r_i} \bmod(p) \qquad\qquad (eq.11)$$

where

$$r_i = (cs_i + z_i) \bmod(q) \qquad\qquad (eq.12)$$

In step S6, after $m$ participants have submitted their responses $R_i$, the server checks their combined responses by verifying

$$R_2^{\chi_{2,B}} \cdot R_3^{\chi_{3,B}} \cdot R_5^{\chi_{5,B}} \bmod(p) = y^c \cdot t_2^{\chi_{2,B}} \cdot t_3^{\chi_{3,B}} \cdot t_5^{\chi_{5,B}} \bmod(p) \qquad \text{(eq.13)}$$

If equality holds, the server considers the command to be authorized by the $m$ participants. The validity of (eq.13) can be checked by direct calculation in a manner analogous to the case of (eq.2) above.

In a first variant of the ZKP embodiment of this invention, the requesting user 42 directly asks the $n$ participants 41-45 to authorize the command by submitting their commitments $t_i$, thus eliminating the need for the Authorization Request AR from the remote server.

In a second variant of the ZKP embodiment, the participants respond directly with $r_i$ (eq.12), i.e. the response $R_i$ is defined as

$$R_i = r_i \qquad \text{(eq.11')}$$

without affecting the zero knowledge property of this new protocol. The automation server then proceeds to the modular exponentiation according to (eq. 11). In this variant, the response transmitted is shorter, and the computationally complex exponentiation is performed by the server rather than by the participants.

The zero knowledge property of this authorisation protocol follows from the fact that the first random and secret numbers $z_i$ mask the secret $s_i$ in the formula for the response $r_i$ (eq.12). Even the server itself is thus no longer in a position to guess the participants' secrets. Evidently, if the auxiliary random number $z_i$ is equal to 0 or some known constant; the commitment $t_i$ becomes trivial and the zero knowledge property is lost.

LIST OF DESIGNATIONS

| | |
|---|---|
| 10 | industrial automation system |
| 11 | automation server |
| 20 | communication network |
| 30 | system administrator |
| 41-45 | 41-45 participants |

**Claims**

1. A method of authorizing critical commands *CC* before execution in an industrial automation system (10), the method being based on a *shared authorization scheme* using a *threshold challenge/response* protocol and requiring confirmation by $m$ authorizing participants (42, 43, 45) out of $n$ remote participants (41-45), each of the $n$ remote participants being provided with a share $s_i$ of a secret key $k$ calculated by way of key splitting in a Galois Field of size q, where the modulus $q$ is a first large prime, comprising

   - receiving, by a server (11) of the automation system (10), a critical command *CC*,
   - receiving, by each of the $m$ authorizing participants, a challenge C based on a random number $c$,
   - returning, by each of the $m$ authorizing participants, a response $R_i$ based on the key share $s_i$ of the authorizing participant and the challenge *C* received, and
   - verifying, by the server (11), an authorisation of the critical command *CC* based on the responses $R_i$ returned by the $m$ authorizing participants and the secret key $k$,

   **characterized in that** the method comprises

   - verifying the authorization of the critical command *CC* based on modular exponentiation of a base $g$ of the form g = $\alpha^N$ mod($p$), where $p$ is a second large prime with $p = Nq+1$, and where $2 \le \alpha \le p-2$.

2. The method according to claim 1, **characterized in that** it comprises

   - calculating, by the server (11), the challenge *C* as a modular exponentiation of the base g by the random number $c$, or
- calculating, by the authorizing participants, the response $R_i$ as a modular exponentiation of the base $g$ by the random number c.

3. The method according to claim 2, **characterized in that** it comprises

- checking, at system set-up, that the base g is a generator of the unique cyclic subgroup $G_q$ of size q.

4. The method according to claim 1, **characterized in that** it comprises

- calculating, by the server (11), the base $g$ as modular exponentiation of a randomly chosen number $\alpha$ by $N$, and
- checking, by the server (11), that the base g is a generator of the unique cyclic subgroup $G_q$ of size $q$ before sending the base g as a challenge C to the participants.

5. The method according to claim 1, **characterized in that** it comprises

- providing, by each of the $m$ authorizing participants, a commitment $t_i$ based on an auxiliary random number $z_i$, and
- returning, by each of the $m$ authorizing participants, a response $R_i$ based on the key share $s_i$ of the authorizing participant, the challenge $C$ received and the auxiliary random number $z_i$.

6. The method according to claim 5, **characterized in that** it comprises

- including, by each of the $m$ authorizing participants, in the commitment $t_i$ a modular exponentiation of the base $g$ by the auxiliary random number $z_i$.

7. The method according to claim 6, **characterized in that** it comprises

- including, by each of the $m$ authorizing participants, in the response $R_i$ a modular exponentiation of the base $g$ by the random number $c$.

8. The method according to claim 6, **characterized in that** it comprises

- performing, by the server (11), modular exponentiation of the base $g$ by the response $R_i$.

9. An automation server (11) configured to authorize, based on a *shared authorization scheme* using a *threshold challenge/response* protocol and requiring confirmation by $m$ authorizing participants (42, 43, 45) out of $n$ remote participants (41-45), and before execution in an industrial automation system (10), a critical command CC received by the server (11), wherein

- each of the $n$ remote participants is provided with a share $s_i$ of a secret key $k$ calculated by way of key splitting in a Galois Field of size q, where the modulus $q$ is a first large prime, and
- each of the $m$ authorizing participants returns a response $R_i$ to the server (11) based on the key share $s_i$ of the authorizing participant and a challenge $C$ received by the authorizing participant, the challenge C being based on a random number $c$,

**characterized in that** the server (11) is configured to verify an authorization of the critical command $CC$ based on the responses $R_i$ returned by the $m$ authorizing participants and the secret key $k$, and based on modular exponentiation of a base $g$ of the form g = $\alpha^N$ mod(p), where $p$ is a second large prime with $p = Nq+1$, and where $2 \leq \alpha \leq p-2$.

10. A computer program including computer program code for controlling one or more processors of an automation server (11) connected to an industrial automation system (10) and of one or more participants (41-45) to execute the method steps according to one of claims 1 to 8.

**Fig. 1**

**Fig. 2**

**Fig. 3**

**European Patent Office**

**EUROPEAN SEARCH REPORT**

Application Number

EP 06 40 5513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | DZUNG D ET AL: "Shared Authorization in Industrial Automation Systems using Threshold Cryptography" EMERGING TECHNOLOGIES AND FACTORY AUTOMATION, 2005. ETFA 2005. 10TH IEEE CONFERENCE ON CATANIA, ITALY 19-22 SEPT. 2005, PISCATAWAY, NJ, USA,IEEE, 19 September 2005 (2005-09-19), pages 867-876, XP010905569 ISBN: 0-7803-9401-1 | 1-4,9,10 | INV. H04L9/32 H04L9/08 |
| Y | * the whole document * | 5-8 | |
| Y | GILLES ZMOR: "Cours de cryptographie" COURS DE CRYPTOGRAPHIE CHAPITRE 8, 2000, pages 165-187, XP002433330 | 5-8 | |
| A | * paragraph [08.3] * | 1-4,9,10 | |
| A | US 2004/030932 A1 (JUELS ARI [US] ET AL) 12 February 2004 (2004-02-12) * paragraph [0059] * | 1-10 | |
| | | | TECHNICAL FIELDS SEARCHED (IPC) |
| A | NAEDELE MARTIN: "Sicherheit in Automatisierungssystemen für Energieversorger" EW, [Online] vol. 104, no. 11, May 2005 (2005-05), pages 56-61, XP002433180 Baden/Schweiz Retrieved from the Internet: URL:http://www.tik.ee.ethz.ch/~naedele/EW0 5.pdf> [retrieved on 2007-05-10] * abstract * | 1-10 | H04L |

-/--

The present search report has been drawn up for all claims

| Place of search | Date of completion of the search | Examiner |
|---|---|---|
| Munich | 16 May 2007 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

European Patent
Office

**EUROPEAN SEARCH REPORT**

Application Number

EP 06 40 5513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CREVATIN M ET AL: "Security for Industrial Communication Systems" PROCEEDINGS OF THE IEEE, IEEE. NEW YORK, US, vol. 93, no. 6, June 2005 (2005-06), pages 1152-1177, XP011133109 ISSN: 0018-9219 * page 1161, left-hand column, paragraph 3 - page 1174, left-hand column, line 3 * ----- | 1-10 | |

TECHNICAL FIELDS
SEARCHED        (IPC)

The present search report has been drawn up for all claims

| Place of search | Date of completion of the search | Examiner |
|---|---|---|
| Munich | 16 May 2007 | Bec, Thierry |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 06 40 5513

This annex lists the patent family members relating to the patent documents cited in  the above-mentioned European search report.
The members are as contained in the European Patent Office EDP file on
The European Patent Office is in no way liable for these particulars which are merely given for the purpose of information.

16-05-2007

| Patent document cited in search report | Publication date | Patent family member(s) | Publication date |
|---|---|---|---|
| US 2004030932    A1 | 12-02-2004 | AU    2003302094  A1<br>EP       1573482  A2<br>JP    2006511104  T<br>WO    2004046849  A2 | 15-06-2004<br>14-09-2005<br>30-03-2006<br>03-06-2004 |

EPO FORM P0459

For more details about this annex : see Official Journal of the European Patent Office, No. 12/82

EP 1 933 497 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DACFEY DZUNG ; CÉLINE BRIOD.** Shared Authorization in Industrial Automation Systems using Threshold Cryptography. *10th IEEE International Conference on Emerging Technologies and Factory Automation, ETFA 2005,* 19 September 2005, vol. 2, 867-876

- Efficient identification and signature for Smart Cards. **C.P.SCHNORR.** Advances in Cryptology -- Crypto. Springer-Verlag, 1990, vol. 89, 239-252